# EUROPÄISCHE PATENTANMELDUNG

(11) **EP 2 607 163 A1**
(43) Veröffentlichungstag der Anmeldung: **26.06.2013**
(21) Anmeldenummer: 13150069.6
(22) Anmeldetag: 02.01.2013
(51) Int. Cl.: B60P 7/08

(54) **Rutschhemmendes Element und Ladeboden mit mindestens einem rutschhemmenden Element**

(30) Priorität: 23.12.2011 DE 102011089790; 21.05.2012 DE 102012208445
(71) Anmelder: Westrick, Ludger, 46342 Velen-Ramsdorf (DE)
(72) Erfinder: Westrick, Ludger, 46342 Velen-Ramsdorf (DE)
(74) Vertreter: Michalski Hüttermann & Partner Patentanwälte

(57) **Zusammenfassung**

Die Erfindung betrifft ein rutschhemmendes Element (1), insbesondere für einen Ladeboden, vorzugsweise für den Ladeboden eines Nutzfahrzeugs. Um eine neuartige Möglichkeit der Sicherung von Ladung zu schaffen, wird mit der Erfindung vorgeschlagen, dass das rutschhemmende Element (1) einen nichttragend ausgebildeten Grundkörper (2) aufweist, an dessen bei bestimmungsgemäßer Anordnung des rutschhemmenden Elements (1) der Ladung zugewandten Seite zumindest teilweise eine ein oder mehrschichtig aufgebaute Beschichtung (3) angeordnet ist, wobei wenigstens die dem Grundkörper (2) abgewandte Oberfläche der Beschichtung (3) rutschhemmend ausgebildet ist, und wobei der Grundkörper (2) derart formstabil ausgebildet ist, dass er zumindest um eine senkrecht auf dem Verbindungsbereich zwischen dem Grundkörper (2) und der Beschichtung (3) stehenden Achse (A) in der Umgebung des Schnittpunktes der Achse (A) mit dem Verbindungsbereich im Wesentlichen nicht verformbar ist.

## Beschreibung

Die Erfindung betrifft ein rutschhemmendes Element, insbesondere für einen Ladeboden, vorzugsweise für den Ladeboden eines Nutzfahrzeugs.

Des Weiteren betrifft die Erfindung einen Ladeboden, vorzugsweise einen Ladeboden eines Nutzfahrzeugs.

Rutschhemmende Elemente werden beispielsweise zur Sicherung einer Ladung auf der Ladefläche eines motorisierten oder nichtmotorisierten Nutzfahrzeugs angeordnet. Ein Nutzfahrzeug kann beispielsweise ein Lastkraftwagen, ein Anhänger, insbesondere Sattelanhänger, oder ein Frachtcontainer sein. Ein solches Nutzfahrzeug weist einen oder mehrere Ladeböden auf, auf dem eine zu transportierenden Ladung angeordnet werden kann. Die auf dem Ladeboden angeordnete Ladung muss während ihres Transports mit dem Nutzfahrzeug gegen Bewegungen relativ zum Ladeboden gesichert werden. Hierzu sind aus dem Stand verschiedene Sicherungsmethoden bekannt.

Eine bestimmte Art der Sicherung der Ladung gegen solche Bewegungen ist beispielsweise aus der Gebrauchsmusterschrift DE 203 05 280 U1 bekannt, nach der eine rutschhemmende Matte auf den Ladeboden gelegt wird, auf die anschließend zu transportierende Ladung gestellt werden kann.

Die Anordnung einer solchen rutschhemmenden Matte erfordert eine manuelle Handhabung derselben vor jedem Beladevorgang, was den Aufwand beim Verladen von Gütern erhöht, insbesondere da vor jeder Beladung eine genaue Positionierung der Matten erforderlich ist. Des Weiteren müssen rutschhemmende Matten für gewöhnlich in einer Menge mittransportiert werden, die es gestattet, den Ladeboden bei Bedarf im Wesentlichen vollständig mit solchen Matten auszulegen, selbst wenn momentan nur ein geringer Teil der gesamten Ladefläche mit Ladung beladen ist, eine vollflächige Auslegung des Ladebodens also nicht erforderlich ist. Da diese Matten nicht mit dem Ladeboden verbunden werden, können sie im Übrigen bei der Verladung leicht verlorengehen.

Auf der anderen Seite ist es beispielsweise aus DE 10 2007 020 589 A1 bekannt, tragende Bestandteile des Ladebodens eines Nutzfahrzeugs unmittelbar mit einer rutschhemmenden Schicht zu versehen. Wenn diese Schicht sehr elastisch ausgelegt ist, ist nachteilig, dass die Räder eines Flurförderzeugs in die Schicht einsinken, so dass das Flurförderzeug nur relativ schwergängig auf dem Ladeboden verfahrbar ist, insbesondere, wenn das Flurförderzeug Ladung trägt. Die Verwendung einer nur wenig elastisch verformbaren Schicht hat den Nachteil, dass diese leicht beschädigt werden kann, beispielsweise durch Kontakt mit den Gabelzinken eines Gabelstaplers. In jedem Fall ist es bei Beschädigung einer solchen Schicht erforderlich, das damit versehene Bauteil des Ladebodens vollständig zu ersetzen, was mit einem hohen Arbeitsaufwand und hohen Kosten verbunden ist.

Aufgabe der Erfindung ist es, eine neuartige Möglichkeit der Sicherung von Ladung zu schaffen, welche die oben genannten Nachteile vermeidet.

Diese Aufgabe wird bei einem rutschhemmenden Element der eingangs genannten Art erfindungsgemäß dadurch gelöst, dass es einen nichttragend ausgebildeten Grundkörper aufweist, an dessen bei bestimmungsgemäßer Anordnung des rutschhemmenden Elements der Ladung zugewandten Seite zumindest teilweise eine ein- oder mehrschichtig aufgebaute Beschichtung angeordnet ist, wobei wenigstens die dem Grundkörper abgewandte Oberfläche der Beschichtung rutschhemmend ausgebildet ist, und wobei der Grundkörper derart formstabil ausgebildet ist, dass er zumindest um eine senkrecht auf dem Verbindungsbereich zwischen dem Grundkörper und der Beschichtung stehenden Achse in der Umgebung des Schnittpunktes der Achse mit dem Verbindungsbereich im Wesentlichen nicht verformbar ist.

Dass der Grundkörper zumindest um eine senkrecht auf dem Verbindungsbereich zwischen dem Grundkörper und der Beschichtung stehenden Achse in der Umgebung des Schnittpunktes der Achse mit dem Verbindungsbereich im Wesentlichen nicht verformbar ist, soll insbesondere bedeuten, dass der Grundkörper um eine solche Biegeachse im Wesentlichen nicht zerstörungsfrei verformbar ist. Diese Eigenschaft wird beispielsweise auch bei der Handhabung eines ebenen Blechstreifens oder eines Papierblatts deutlich, insbesondere da ein Blechstreifen oder ein Papierblatt nicht um eine senkrecht auf dem Blechstreifen bzw. dem Papierblatt stehende Achse in der Umgebung der Achse verformbar ist. Da der Grundkörper andererseits aufgrund physikalischer Eigenschaften nicht absolut starr ausgebildet sein kann, ist der Grundkörper gemäß Patentanspruch 1 um die senkrecht auf dem Verbindungsbereich stehende Achse im Wesentlichen nicht verformbar.

Das erfindungsgemäße rutschhemmende Element kann zur Erstausstattung eines Nutzfahrzeugs gehören, oder es kann ein bereits vorhandenes Nutzfahrzeug mit einem solchen rutschhemmenden Element nachgerütet werden.

Das erfindungsgemäße rutschhemmende Element wird über den nichttragenden Grundkörper mit anderen Bestandteilen des Ladebodens verbunden. Dies kann über einen Formschluss, Stoffschluss, Kraftschluss und/oder über eine Verschraubung oder ähnliches geschehen. Hierdurch kann das rutschhemmende Element nicht wesentlich relativ zu dem Ladeboden verrutschen. Auch kann es nicht wie die herkömmlichen rutschhemmenden Matten beim Verladen verlorengehen.

Wesentlich ist, dass bei bestimmungsgemäßer Anordnung des rutschhemmenden Elements zumindest auf der der Ladung zugewandten Seite des nichttragenden Grundkörpers wenigstens teilweise die rutschhemmende Beschichtung vorhanden ist.

Dass der Grundkörper nichttragend ausgebildet ist, soll im Rahmen der Erfindung bedeuten, dass er sich ohne Unterstützung durch ein tragendes Element eines Ladebodens unter Belastung mit Ladung derart verformen würde, dass er nicht als tragendes Element eines Ladebodens geeignet ist. Die Ausbildung des Grundkörpers als tragendes Element des Ladebodens ist in der Regel nur unter Verwendung einer größeren Menge an Material und somit unter nachteiliger Erhöhung des Gewichts des Grundkörpers und folglich des rutschhemmenden Elements möglich, was es gerade zu vermeiden gilt. Zudem würde ein rutschhemmendes Element mit einem tragenden Grundkörper, beispielsweise in Form eines Holms oder U-Trägers, eine größere Bauhöhe aufweisen und wäre daher schwieriger in einen Ladeboden zu integrieren bzw. würde relativ hoch von einem Ladeboden abstehen, so dass ein Überfahren eines solchen rutschhemmenden Elements mit einem Flurförderzeug unter Umständen nur sehr schwer oder gar nicht möglich ist.

Im Fall einer mehrschichtigen Beschichtung, kann die Beschichtung aus Schichten mit unterschiedlichen Eigenschaften, insbesondere bezüglich ihrer rutschhemmenden Eigenschaften, gebildet sein. Wichtig ist, dass die dem Grundkörper abgewandte Oberfläche der Beschichtung die gewünschten rutschhemmenden Eigenschaften aufweist.

Vorzugsweise ist der Grundkörper plastisch verformbar, um seine Formgebung auf einfache Art und Weise an die jeweilige Struktur eines damit auszustattenden Ladebodens anpassen zu können. Hierdurch kann der Grundkörper wie z. B. aus der allgemeinen Blechbearbeitung bekannt beispielsweise abgewinkelt werden, um den abgewinkelten Teil des Grundkörpers zumindest teilweise zur Ausbildung eines Formschlusses wenigstens teilweise in eine entsprechend ausgebildete Öffnung in dem Ladeboden einfügen zu können.

Als Materialien für den Grundkörper kommen beispielsweise Metalle, insbesondere in Form eines Blechs, Kunststoffe, faserverstärkte Kunststoffe oder anderweitige, relativ formstabile Werkstoffe in Betracht.

Gemäß einer vorteilhaften Ausgestaltung ist wenigstens eine unterseitige Profilierung am rutschhemmenden Element vorgesehen. Mit dieser Ausgestaltung des rutschhemmenden Elements wird eine gute Anlage der Ränder des rutschhemmenden Elements am Ladeboden erreicht, wodurch die Sicherungswirkung des rutschhemmenden Elements noch weiter gesteigert wird.

Unter der erwähnten Profilierung des rutschhemmenden Elements soll auch eine ein- oder mehrteilige Beschichtung, z. B. aus Materialien mit unterschiedlichen Eigenschaften, wie z. B. unterschiedlichen Härten, verstanden werden. Dabei sorgt z. B. ein weicheres Material vorzugsweise für die Rutschhemmung und härteres Materials vorzugsweise für die Formbeständigkeit des rutschhemmenden Elements. Eine Profilierung, sowohl hinsichtlich der Form des rutschhemmenden Elements als auch im vorstehend dargelegten Sinn, kann auch oberseitig oder an den Kanten des rutschhemmenden Elements vorgesehen sein.

Nach einer weiteren vorteilhaften Ausgestaltung ist das rutschhemmende Element an mindestens einer Seite mit einer Auflaufhilfe ausgebildet. Hierdurch wird eine Verminderung der Beschädigungsgefahr für das rutschhemmende Element im Einsatz erreicht, wenn ein Ladegut oder ein Ladungsträger, wie beispielsweise eine Palette, über einen mit dem rutschhemmenden Element versehenen Ladeboden geschoben wird.

Eine weitere vorteilhafte Ausgestaltung sieht vor, dass der Grundkörper oder die Beschichtung oder beide jeweils aus federndem und/oder elastischem Material z. B. beschichteter Federstahl bestehen. Das rutschhemmende Element erhält auf diese Weise federnde Eigenschaften, kann sich also unter der Last eines Ladegutes oder Ladungsträgers abflachen und stellt sich nach Wegnahme des Ladegutes oder Ladungsträgers in seine ursprüngliche Form zurück. Hiermit wird eine besonders gute Anpassung und Anpressung der Oberseite des rutschhemmenden Elements an unterseitig unterschiedlich geformte Ladegüter oder Ladungsträger erreicht, was die rutschhemmende Wirkung wesentlich verbessert.

Es wird weiter als vorteilhaft erachtet, wenn im rutschhemmenden Element mindestens eine Durchbrechung angebracht ist, durch welche ein Verbindungsmittel, wie eine Schraube oder ein Niet, zur Verbindung des rutschhemmenden Elements mit einem Ladeboden hindurchführbar ist. Hiermit wird die Montage des rutschhemmenden Elements auf einem Ladeboden erleichtert, und es wird gewährleistet, dass die Verbindungsmittel in passendem Abstand und passender Anzahl angebracht werden. Außerdem kann das rutschhemmende Element bei Beschädigung oder Verschleiß leicht ausgewechselt werden, ohne dass dabei der Ladeboden beschädigt wird.

Vorteilhafterweise ist die Auflaufhilfe am rutschhemmenden Element durch mindestens eine Auflaufschräge gebildet. Hierdurch kann eine besonders wirksame Verminderung der Beschädigungsgefahr für das rutschhemmende Element durch über einen Ladeboden geschobenes Ladegut erreicht werden. Dabei kann die Auflaufschräge eben oder auch gewölbt oder gerundet sein.

Mit der Erfindung wird des Weiteren ein Ladeboden, insbesondere für ein Nutzfahrzeug, vorgeschlagen, der wenigstens ein rutschhemmendes Element nach einer der oben beschriebenen Ausgestaltungen oder einer beliebigen Kombination derselben aufweist. Damit sind die oben genannten Vorteile verbunden.

Das rutschhemmende Element nimmt vorzugsweise nur einen relativ kleinen Teil der durch den Ladeboden gegebenen Ladefläche ein. Es kann beispielsweise in Längs- oder in Querrichtung an dem Ladeboden angeordnet sein. Des Weiteren kann das rutschhemmende Element mit einem Einlegeboden und/oder mit der Tragstruktur (Längsträger, Querträger) des Ladebodens verbunden sein.

Der Ladeboden kann gemäß der Erfindung verschiedenste Ausgestaltungen haben. Beispielsweise ist neben einer vollflächigen Ausgestaltung eine gitterförmige Struktur oder eine aus nur wenigen Holmen gebildete Struktur möglich. Das erfindungsgemäße rutschhemmende Element kann durch seine Ausgestaltung sicher mit solchen Elementen des Ladebodens verbunden werden.

Gemäß einer vorteilhaften Ausgestaltung ist das rutschhemmende Element mit dem Ladeboden unter Vorspannung verbunden. Hiermit wird ein besonders sicherer Halt des rutschhemmenden Elements am Ladeboden gewährleistet und es wird insbesondere verhindert, dass sich Randbereiche des rutschhemmenden Elements beim Aufschieben von Ladegut oder Ladungsträgern nach oben hin umklappen und dadurch beschädigt oder sogar abgeschert werden.

Nach einer weiteren vorteilhaften Ausgestaltung ist das rutschhemmende Element in Abständen mit dem Ladeboden verbunden, insbesondere verschraubt oder vernietet. Hierdurch ist die zuvor erwähnte Vorspannung erzielbar.

Ferner wird es als vorteilhaft erachtet, wenn das rutschhemmende Element mit dem Ladeboden verklebt ist. Auch auf diese Weise kann das rutschhemmende Element sicher mit dem Ladeboden verbunden und gegen Beschädigungen, insbesondere seiner Randbereiche, geschützt werden. Bei Verwendung eines entsprechend elastischen Verbindungsmittels, wie dauerelastischer Kleber, wird auch die oben beschriebene Federwirkung des rutschhemmenden Elements nicht beeinträchtigt.

Im Folgenden wird die Erfindung unter Bezugnahme auf die anliegenden Figuren anhand von Ausführungsbeispielen exemplarisch erläutert, wobei die nachfolgend dargestellten Merkmale sowohl jeweils für sich genommen als auch in Kombination miteinander einen Aspekt der Erfindung darstellen können. Es zeigen
- Figur 1:: eine schematische Darstellung eines Ausführungsbeispiels für das erfindungsgemäße rutschhemmende Element,
- Figur 2:: eine schematische Darstellung verschiedener Ausführungsbeispiele des erfindungsgemäßen rutschhemmenden Elementes und Ladebodens
- Figur 3:: eine schematische und perspektivische Darstellung weiterer Ausführungsvarianten des erfindungsgemäßen rutschhemmenden Elements.

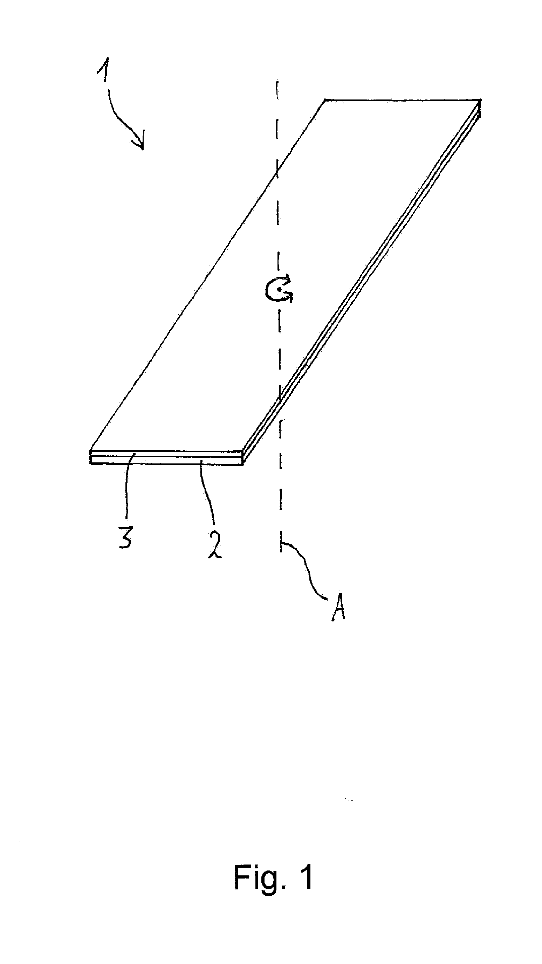

Die beiliegende Figur 1 zeigt ein Ausführungsbeispiel für das erfindungsgemäße rutschhemmende Element 1 und die bespielhafte Lage mindestens einer Achse, um die dieses Element im wesentlichen nicht gebogen werden kann. Dieses umfasst einen flächig ausgebildeten Grundkörper 2 aus Blech, dessen mit der nicht dargestellten Ladung in Kontakt kommende Oberseite mit einer rutschhemmenden Beschichtung 3 versehen ist. Da der Grundkörper 3 z. B. aus Blech gebildet ist, kann die Form des rutschhemmenden Elements 1 durch Biegen auf einfache Art und Weise an die jeweilige Formgebung eines damit auszustattenden Ladebodens angepasst werden. Der Verbindungsbereich zwischen dem Grundkörper 2 und der Beschichtung 3 ist parallel zu dem Grundkörper 2 und der Beschichtung 3 angeordnet. Senkrecht zu dem Verbindungsbereich ist eine Achse A angeordnet. In der Umgebung des Schnittpunktes von der Achse A mit dem Verbindungsbereich ist der Grundkörper 2 im wesentlichen nicht entsprechend dem dargestellten Pfeil um mindestens eine Achse A verformbar, also formstabil.

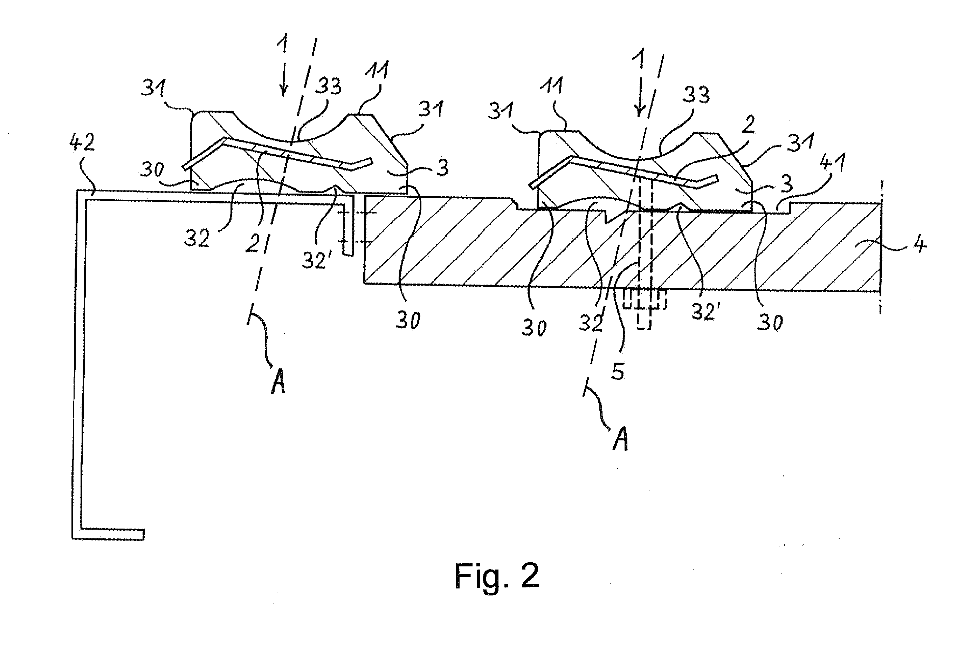

Die Figur 2 zeigt einen Ladeboden 4 mit zwei darauf montierten rutschhemmenden Elementen 1 im Querschnitt. Jedes rutschhemmende Element 1 besteht aus mindestens zwei Teilen, nämlich einem, z. B. metallischen, ein- oder mehrteiligen Grundkörper 2 und einer diesen umgebenden, zum Beispiel angegossenen oder angespritzten, ein- oder mehrteiligen Beschichtung 3 aus einem vorzugsweise elastisch-flexiblen Material, insbesondere Kunststoff oder Gummi.

Der Grundkörper 2 ist hier z. B. als länglicher Metallblechstreifen ausgeführt, der im Querschnitt gesehen zwei einander entgegengesetzte Abbiegungen aufweist. Die Achsen A sind bezüglich der jeweilig zwischen den Abbiegungen angeordneten mittigen Abschnitte der Grundkörper 2 dargestellt.

Die Beschichtung 3 umgibt hier den Grundkörper 2 mit Ausnahme von dessen in Figur 2 linkem Randbereich, wo der Grundkörper 2 aus der Beschichtung 3 vorragt. Die Beschichtung 3 besitzt im Querschnitt gesehen unterseitig eine Profilierung 32, 32'. Mit den seitlichen Kanten 30 der Beschichtung 3 liegt das rutschhemmende Element 1 auf dem Ladeboden 4 auf.

An ihrer Oberseite 11 ist die Beschichtung 3 hier z. B. mit einer Profilierung 33 versehen. Mindestens im Bereich der Oberseite 11 des Elements 1 besitzt die Beschichtung 3 rutschhemmende Eigenschaften hinsichtlich darauf aufgesetzter Ladegüter oder Ladungsträger.

Der Ladeboden 4 besteht aus einem üblichen Material, beispielsweise Holz, Aluminium oder Stahl, und besitzt hier im Beispiel an seiner Oberseite für die Aufnahme des in Figur 2 rechts dargestellten rutschhemmenden Elements 1 eine flache, eingetiefte Nut 41.

Das Element 1 kann auch ohne Nut 41 auf die Ladebodenoberfläche aufgesetzt sein.

Zweckmäßig ist das rutschhemmende Element 1 der Geometrie des Ladebodens 4 angepasst. Dabei können auch z. B. im Ladeboden 4 ohnehin vorhandene Nuten oder Spalte für die Anbringung des rutschhemmenden Elements 1 genutzt werden.

Das in Figur 2 rechte rutschhemmende Element 1 ist mittels mehrerer, in der Zeichnungsfigur gestrichelt dargestellter, in Abständen entlang des rutschhemmenden Elements 1 angeordneter Verbindungsmittel 5, wie Schrauben, unter Vorspannung mit dem Ladeboden 4 verbunden. Die Vorspannung wird dazu genutzt, die Beschichtung 3 im Bereich ihrer seitlichen Kanten 30 gegen die Oberseite des Ladebodens 4 im Bereich seiner Nut 41 anzupressen. Hierdurch werden die Kanten 30 im wesentlichen in sicherer Anlage am Ladeboden 4 gehalten. Links von dem Ladeboden 4 ist ein metallisches Profil 42 dargestellt, welches im dargestellten Beispiel den Ladeboden 4 seitlich abschließt. Da am Profil 42 nicht ohne weiteres eine Nut angebracht werden kann, ist hier das in der Figur 2 links dargestellte rutschhemmende Element 1 übergreifend auf die Oberseite des Ladebodens 4 und des daran anschließenden Profils 42 aufgesetzt, vorzugsweise aufgeklebt oder angeschraubt.

Im Beispiel besitzt die Beschichtung 3 im Bereich ihrer Ränder oberseitig jeweils mindestens eine Auflaufhilfe 31. Diese Auflaufhilfen 31 erlauben das Aufschieben eines Ladegutes oder Ladungsträgers entlang der Oberfläche des Ladebodens 4 auf das rutschhemmende Element 1, ohne dass dessen Beschichtung 3 dabei beschädigt wird. Die Auflaufhilfen 31 können dabei z.B. als ebene Schrägflächen (rechter Rand) oder als Rundungen (linker Rand) ausgeführt sein.

Wenn ein entsprechend schweres Ladegut oder ein Ladungsträger mit einem entsprechend schweren Ladegut auf dem rutschhemmenden Element 1 steht, wird dieses durch das Gewicht federnd nach unten gedrückt, wodurch sich eine besonders gute Anpassung und Anpressung der Oberseite 11 des rutschhemmenden Elements 1 an die Unterseite des darauf stehenden Ladegutes oder Ladungsträgers und damit eine besonders wirksame Rutschhemmung ergibt. Wenn das Ladegut oder der Ladungsträger entfernt wird, stellt sich das rutschhemmende Element 1 aufgrund seiner federnden Eigenschaften in den Ausgangszustand gemäß der Figur 2 zurück.

Je nach der Art und Größe des auf dem Ladeboden 4 zu transportierenden Ladegutes können rutschhemmende Elemente 1 in entsprechender Anzahl und mit entsprechendem, passendem Abstand und in geeigneter Ausrichtung so auf dem Ladeboden 4 angeordnet werden, dass jedes Ladegut oder jeder Ladungsträger immer zumindest auf einem rutschhemmenden Element 1 aufliegt.

Bei Verschleiß oder Beschädigung kann jedes rutschhemmende Element 1 durch Lösen der Verbindungsmittel 5 oder der Verklebung leicht entfernt und durch ein neues rutschhemmendes Element 1 ersetzt werden.

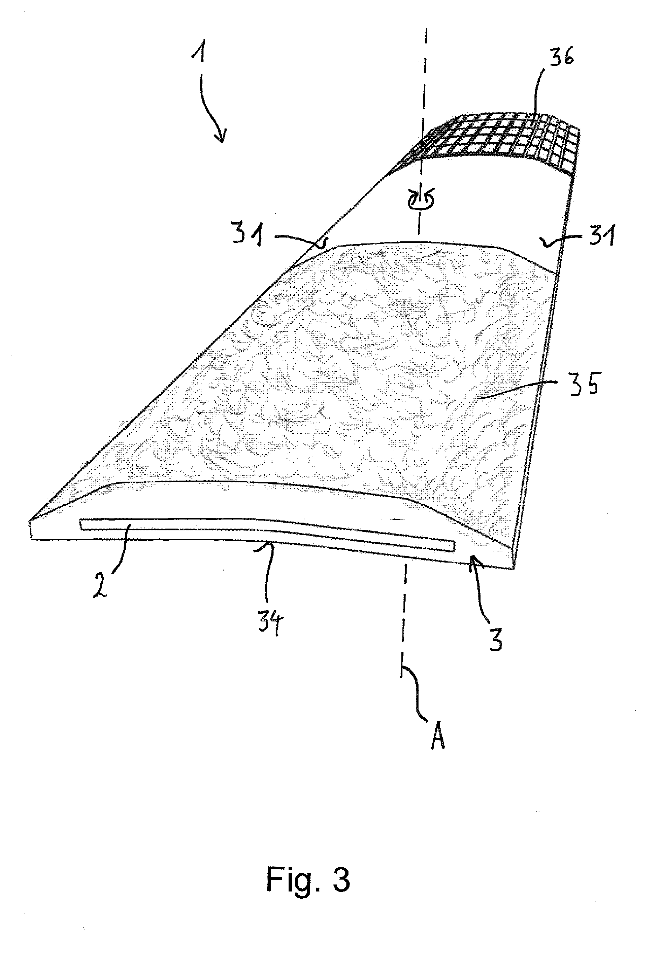

Figur 3 zeigt schematisch und perspektivisch weitere Ausführungsvarianten des erfindungsgemäßen rutschhemmenden Elements 1. Hier wird die Form des rutschhemmenden Elements 1 verändert, so dass an der Unterseite des rutschemmenden Elements 1 eine Profillierung 34 in Form einer Wölbung mit den oben genannten Vorteilen ausgebildet wird. Da die Beschichtung 3 auf der einem Ladegut oder einem Ladungsträger zugewandten Seite des Grundkörpers 2 größeren mechanischen Beanspruchungen ausgesetzt ist, ist die Dicke der Beschichtung 3 auf dieser Seite des Grundkörpers 2 größer als auf der dem nicht gezeigten Ladeboden 4 zugewandten Seite des Grundkörpers 2. Des Weiteren sind an der Oberseite der Beschichtung 3 entlang der Längserstreckung des rutschhemmenden Elements 1 verlaufende Auflaufhilfen 31 in Form von ebenen Auflaufschrägen ausgebildet. Um mögliche Ausführungsbeispiele des rutschhemmenden Elements 1 zu zeigen, sind drei verschiedene Oberflächenstrukturen an der Oberseite der Beschichtung gezeigt. Das dem Betrachter zugewandte vordere Ende der Oberseite ist mit einer Profilierung 35 in Form einer unregelmäßigen Strukturierung versehen. In dem dahinter liegenden mittleren Bereich weist die Oberfläche keine Strukturierung auf. An dem dem Betrachter abgewandten hinteren Ende ist die Oberseite mit einer Profillierung 36 in Form beispielsweise einer Gitterstruktur versehen, um auch bei auf dem rutschhemmenden Element 1 vorhandener Feuchtigkeit oder Nässe gute rutschsichernde Eigenschaften zu erhalten.

## Patentansprüche

1. Rutschhemmendes Element (1), insbesondere für einen Ladeboden, vorzugsweise für den Ladeboden eines Nutzfahrzeugs, aufweisend einen nichttragend ausgebildeten Grundkörper (2), an dessen bei bestimmungsgemäßer Anordnung des rutschhemmenden Elements (1) der Ladung zugewandten Seite zumindest teilweise eine ein oder mehrschichtig aufgebaute Beschichtung (3) angeordnet ist, wobei wenigstens die dem Grundkörper (2) abgewandte Oberfläche der Beschichtung (3) rutschhemmend ausgebildet ist, und wobei der Grundkörper (2) derart formstabil ausgebildet ist, dass er zumindest um eine senkrecht auf dem Verbindungsbereich zwischen dem Grundkörper (2) und der Beschichtung (3) stehenden Achse (A) in der Umgebung des Schnittpunktes der Achse (A) mit dem Verbindungsbereich im Wesentlichen nicht verformbar ist.

2. Rutschhemmendes Element (1) nach Anspruch 1, **dadurch gekennzeichnet, dass** wenigstens eine unterseitige Profilierung (32, 32', 34) am rutschhemmenden Element (1) vorgesehen ist.

3. Rutschhemmendes Element (1) nach Anspruch 1 oder 2, **dadurch gekennzeichnet, dass** das rutschhemmende Element (1) an mindestens einer Seite mit einer Auflaufhilfe (31) ausgebildet ist.

4. Rutschhemmendes Element (1) nach Anspruch 3, **dadurch gekennzeichnet, dass** die Auflaufhilfe (31) durch mindestens eine Auflaufschräge gebildet ist.

5. Rutschhemmendes Element (1) nach einem der vorhergehenden Ansprüche, **dadurch gekennzeichnet, dass** der Grundkörper (2) oder die Beschichtung (3) oder beide jeweils aus federndem und/oder elastischem Material bestehen.

6. Rutschhemmendes Element (1) nach einem der vorhergehenden Ansprüche, **dadurch gekennzeichnet, dass** im rutschhemmenden Element (1) mindestens eine Durchbrechung angebracht ist, durch welche ein Verbindungsmittel (5) zur Verbindung des Elements (1) mit einem Ladeboden (4) hindurchführbar ist.

7. Rutschhemmendes Element (1) nach einem der vorhergehenden Ansprüche, **dadurch gekennzeichnet, dass** der Grundkörper (2) aus Metall gebildet ist.

8. Rutschhemmendes Element (1) nach einem der vorhergehenden Ansprüche, dass der Grundkörper (2) aus Blech gebildet ist.

9. Ladeboden (4), vorzugsweise Ladeboden (4) eines Nutzfahrzeugs, **gekennzeichnet durch** mindestens ein rutschhemmendes Element (1) nach einem der vorhergehenden Ansprüche.

10. Ladeboden (4) nach Anspruch 9, **dadurch gekennzeichnet, dass** das rutschhemmende Element (1) mit dem Ladeboden (4) unter Vorspannung verbunden ist.

11. Ladeboden (4) nach Anspruch 9 oder 10, **dadurch gekennzeichnet, dass** das rutschhemmende Element (1) in Abständen mit dem Ladeboden (4) verbunden, insbesondere verschraubt oder vernietet, ist.

12. Ladeboden (4) nach einem der Ansprüche 9 bis 11, **dadurch gekennzeichnet, dass** das rutschhemmende Element (1) mit dem Ladeboden (4) verklebt ist.
